# EUROPEAN PATENT APPLICATION

(11) **EP 1 758 380 A2**
(43) Date of publication of application: **28.02.2007**
(21) Application number: 06025770.6
(22) Date of filing: 28.11.2001
(51) Int. Cl.: H04N 5/445

(54) **Information processing method and apparatus and recording medium**

(30) Priority: 30.11.2000 JP 2000365607
(62) Divisional of application: 01309963.5
(71) Applicant: SONY CORPORATION, Tokyo 141 (JP); Justsystem Corporation, Tokushima-shi, Tokushima (JP)
(72) Inventor: Maeda, Satoru, Shinagawa-ku Tokyo 141 (JP); Tsurumi, Kazushige, Shinagawa-ku Tokyo 141 (JP); Sayama, Yushi, Shinagawa-ku Tokyo 141 (JP); Yoshikawa, Munehiro, Shinagawa-ku Tokyo 141 (JP); Mizobuchi, Ayumi, Shinagawa-ku Tokyo 141 (JP); Miura, Takaaki, Shinagawa-ku Tokyo 141 (JP); Takata, Katsuhisa, Shinagawa-ku Tokyo 141 (JP); Fujimaki, Yusuke, Shinagawa-ku Tokyo 141 (JP)
(74) Representative: Turner, James Arthur

(57) **Abstract**

In an apparatus for receiving digital television broadcast, a user may be safeguarded from misconception that the apparatus may be in disorder. When a channel for receipt is commanded in the apparatus for receiving digital television broadcast, the number of the channel is acquired (step S11). It is verified (step S12) whether or not the channel so selected has been set as being a channel for reception. If the result of check is affirmative, a picture for the channel is displayed (step S14). If otherwise, that is if the channel selected has not been set as the channel for reception, the effect that the channel cannot be viewed is displayed (step S15).

## Description

This invention relates to an information processing method and apparatus and a recording medium.

Recently, digital television broadcast is stirring up notice. In this nation, experimental broadcast is scheduled to commence as from December 2000.

In digital television broadcast, the number of channels is increased, so that the user is able to select and view a program the or she desires to view.

If, in digital television broadcast, the number of the programs is increased, the operation of receiving and selecting one of the large number of programs becomes laborious. For this reason, it has been proposed to select a program by so-called electronic program guide (EPG).

Meanwhile, the digital television broadcast by ground waves is territory specific such that the receivable channels differ from one territory to another.

If the electronic program guide is edited from one broadcast territory to another, the viewers of respective broadcast territories are able to select programs, without surplus or deficit, by employing the electronic program guides edited from one broadcast territory to another.

However, the electronic program guides are edited, by and large, to cover the entire broadcast territories, in order to be usable in the totality of the broadcast territories.

The result is that a viewer who has selected a preset program based on the electronic program guide can, as a matter of course, not view the program which is a program not aired for the broadcast territory of the viewer.

So, there is a risk that the viewer feels that the television receiver or the electronic program guide is malfunctioning and lays complaints before the producer of the broadcast receiving equipment or the electronic program guide purveyor.

Various respective aspects and features of the invention are defined in the appended claims. Features from the dependent claims may be combined with features of the independent claims as appropriate and not merely as explicitly set out in the claims.

Embodiments of the present invention can provide a more satisfactory user interface designed to safeguard the user from making such misconception.

In one aspect, the present invention provides an information processing apparatus including acquisition means for acquiring data of an electronic program guide, electronic program guide display controlling means for controlling the display of the electronic program guide based on data of the electronic program guide acquired by the acquisition means, selection means for selecting a preset program based on the electronic program guide controlled as to display by the electronic program guide display controlling means, verifying means for verifying whether or not the program selected by the selecting means is a program of a channel that is receivable, and output information controlling means for controlling the information output for having the viewer recognize that, if the program selected by the selection means is verified as not being a program of a channel that is receivable, the program is not receivable.

The output information controlling means may issue an alarm indicating that the program as selected by the selection means is not receivable.

The output information controlling means may display a background picture if the program selected by the selection means is not receivable.

The information processing apparatus may further include detailed information display controlling means for controlling the display of the detailed information of a program demonstrated in the electronic program guide.

In another aspect, the present invention provides an information processing method including an acquisition step of acquiring data of an electronic program guide, an electronic program guide display controlling step of controlling the display of the electronic program guide based on data of the electronic program guide acquired by processing in the acquisition step, a selection step of selecting a preset program based on the electronic program guide controlled as to display by processing in the electronic program guide display controlling step, a verifying step of verifying whether or not the program selected by processing in the selecting step is a program of a channel that is receivable, and an output information controlling step of controlling the information output for having the viewer recognize that, if the program selected by processing in the selection step is verified as not being a program of a channel that is receivable, the program is not receivable.

In still another aspect, the present invention provides a recording medium having recorded therein a computer-readable program, in which the program includes an acquisition step of acquiring data of an electronic program guide, an electronic program guide display controlling step of controlling the display of the electronic program guide based on data of the electronic program guide acquired by processing in the acquisition step, a selection step of selecting a preset program based on the electronic program guide controlled as to display by processing in the electronic program guide display controlling step, a verifying step of verifying whether or not the program selected by processing in the selecting step is a program of a channel that is receivable, and an output information controlling step of controlling the information output for having the viewer recognize that, if the program selected by processing in the selection step is verified as not being a program of a channel that is receivable, the program is not receivable.

In still another aspect, the present invention provides an information processing apparatus including acquisition means for acquiring data of an electronic program guide, first retrieval means for retrieving a program aired within a preset time as from the current time, based on the electronic program guide data acquired by the acquisition means, second retrieval means for retrieving the program aired at the current time, from the electronic program guide data acquired by the acquisition means, selection means for selecting one of retrieval by the first retrieval means and retrieval by the second retrieval means and electronic program guide display controlling means for controlling the display of the electronic program guide based on retrieved results by the first retrieval means or retrieved results by the second retrieval means as selected by the selection means.

The information processing apparatus may further include designating means for designating a program to be received based on the electronic program guide controlled as to display by the electronic program guide display controlling means.

In still another aspect, the present invention provides an information processing method including an acquisition step of acquiring data of an electronic program guide, a first retrieval step of retrieving a program aired within a preset time as from the current time, based on the electronic program guide data acquired by processing in the acquisition step, a second retrieval step of retrieving the program aired at the current time, from the electronic program guide data acquired by processing in the acquisition step, a selection step of selecting one of retrieval by processing in the first retrieval step and retrieval by processing in the second retrieval step and an electronic program guide display controlling step of controlling the display of the electronic program guide based on retrieved results by processing in the first retrieval step or retrieved results by processing in the second retrieval step as selected by processing in the selection step.

In still another aspect, the present invention provides a recording medium having recorded thereon a computer-readable program, in which the computer-readable program includes an acquisition step of acquiring data of an electronic program guide, a first retrieval step of retrieving a program aired within a preset time as from the current time, based on the electronic program guide data acquired by processing in the acquisition step, a second retrieval step of retrieving the program aired at the current time, from the electronic program guide data acquired by processing in the acquisition step, a selection step of selecting one of retrieval by processing in the first retrieval step and retrieval by processing in the second retrieval step, and an electronic program guide display controlling step of controlling the display of the electronic program guide based on retrieved results by processing in the first retrieval step or retrieved results by processing in the second retrieval step as selected by processing in the selection step.

In another aspect, the present invention provides an information processing apparatus including receiving means for receiving data of a program being aired, program display controlling means for controlling the display of a program based on data received by the receiving means, command means for commanding display of a chat and chat display controlling means for controlling the display of a chat window so that, when display of the chat is commanded by the command means, the chat window display is not overlapped with the program displayed.

The information processing apparatus may further include retrieval means for retrieving a chat room opened in association with a program displayed when the chat is commanded to be displayed by the command means and icon display controlling means for controlling the display so that an icon associated with the chat room retrieved by the retrieval means is opened in the chat window.

In still another aspect, the present invention provides an information processing method including a receiving step of receiving data of a program being aired, a program display controlling step of controlling the display of a program based on data received by processing in the receiving step, a command step of commanding display of a chat, and a chat display controlling step of controlling the display of a chat window so that, when display of the chat is commanded by processing in the command step, the chat window display is not overlapped with the program displayed.

In still another aspect, the present invention provides a recording medium having recorded thereon a computer-readable program, in which the computer-readable program includes a receiving step of receiving data of a program being aired, a program display controlling step of controlling the display of a program based on data received by processing in the receiving step, a command step of commanding display of a chat and a chat display controlling step of controlling the display of a chat window so that, when display of the chat is commanded by processing in the command step, the chat window display is not overlapped with the program displayed.

In still another aspect, the present invention provides an information processing apparatus including web information acquisition means for acquiring data of the web information, program information acquisition means for acquiring data of the program information being television broadcast, information display controlling means for controlling simultaneous display of the web information and the program information based on the data of the web information acquired by the web information acquisition means and the data of the program information acquired by the program information acquisition means and changing means for changing the program information to be acquired, in a state in which the web information and the program information are displayed simultaneously.

The changing means may change a broadcasting channel being received as the program information.

The changing means may erase a broadcasting channel being received as the program information.

In still another aspect, the present invention provides an information processing method including a web information acquisition step for acquiring data of the web information, a program information acquisition step for acquiring data of the program information being television broadcast, an information display controlling step for controlling simultaneous display of the web information and the program information based on the data of the web information acquired by processing in the web information acquisition step and the data of the program information acquired by processing in the program information acquisition step and a changing step for changing the program information to be acquired, in a state in which the web information and the program information are displayed simultaneously.

In yet another aspect, the present invention provides a recording medium having recorded thereon a computer-readable program, in which the computer-readable program includes a web information acquisition step for acquiring data of the web information, a program information acquisition step for acquiring data of the program information being television broadcast, an information display controlling step for controlling simultaneous display of the web information and the program information based on the data of the web information acquired by processing in the web information acquisition step and the data of the program information acquired by processing in the program information acquisition step, and a changing step for changing the program information to be acquired, in a state in which the web information and the program information are displayed simultaneously.

In the information processing method and apparatus and the recording medium, according to the first to third aspects of the present invention, the information output for the viewer to recognize that the program is not receivable if it is verified that the selected program is not a program of a receivable channel is controlled.

In the information processing method and apparatus and the recording medium, according to the first to third aspects of the present invention, the information output for the viewer to recognize that, if the selected program is not the program of a channel that is receivable, the program is not receivable, is controlled, thus minimizing the risk of misconception by the viewer as to possible disorder of the apparatus or the function.

In the information processing method and apparatus and the recording medium, according to the fourth to sixth aspects of the present invention, the electronic program guide is displayed based on the retrieved results of programs aired within a preset time as from the current time point or on the retrieved results of programs being aired at the current time point.

In the information processing method and apparatus and the recording medium, according to the fourth to sixth aspects of the present invention, in which the electronic program guide is displayed based on the retrieved results of programs aired within a preset time as from the current time point or on the retrieved results of programs being aired at the current time point, the viewer is able to select the program he or she desires, from a large number of programs, thus realizing more satisfactory user interface.

In the information processing method and apparatus and the recording medium, according to the seventh to ninth aspects of the present invention, if a chat display is commanded, a chat window is displayed so that the chat window displayed is not overlapped with the program display.

In the information processing method and apparatus and the recording medium, according to the seventh to ninth aspects of the present invention, the chat window is displayed so as not to be overlapped with the program display, with the result that a system may be provided in which a chat pertinent to the program can be had.

In the information processing method and apparatus and the recording medium, according to the seventh to ninth aspects of the present invention, the program information to be acquired is changed in a state in which the web information and the program information are displayed simultaneously.

In the information processing method and apparatus and the recording medium, according to the tenth to twelfth aspects of the present invention, in which the program information acquired is changed in a state in which the web information and the program information are displayed simultaneously, any optional program information can be viewed without dependency on the display state of the web information, with the result that the user can view the web information and the program information simultaneously without limitations.

The invention will now be described by way of example with reference to the accompanying drawings, throughout which like parts are referred to by like references, and in which:
Fig.1 shows an illustrative structure of an information receiving system embodying the present invention.
Fig.2 is a block diagram showing an illustrative structure of a station selection device of Fig.1.
Fig.3 is a block diagram showing an illustrative structure of the display device shown in Fig.1.
Fig.4 shows an instance of display of an ee program guide.
Fig.5 is a flowchart for illustrating the processing in case of actuation of a 24-hour button of Fig.4.
Fig.6 is a flowchart for illustrating the picture display processing in the information receiving system of Fig.1.
Fig.7 shows an instance of display at step S14 of Fig.6.
Fig.8 shows an instance of display at step S15 of Fig.6.
Fig.9 is a flowchart for illustrating the detailed information display processing in the information receiving system shown in Fig.1.
Fig.10 shows an instance of display at step S31 of Fig.9.
Fig.11 is a flowchart for illustrating the processing of the information receiving system of Fig.1 on actuation of a real time button of Fig.4.
Fig.12 shows an instance of display at step S42 of Fig.11.
Fig.13 is a flowchart for illustrating the operation of the information receiving system of Fig.1 in case the picture shown in Fig.12 is being displayed.
Fig.14 is a flowchart for illustrating the processing of the information receiving system of Fig.1 on actuation of a chat button of Fig.4.
Fig.15 shows an instance of display at step S65 of Fig.14.
Fig.16 is a flowchart for illustrating the operation of the information receiving system of Fig.1 in case the picture shown in Fig.15 is being displayed.

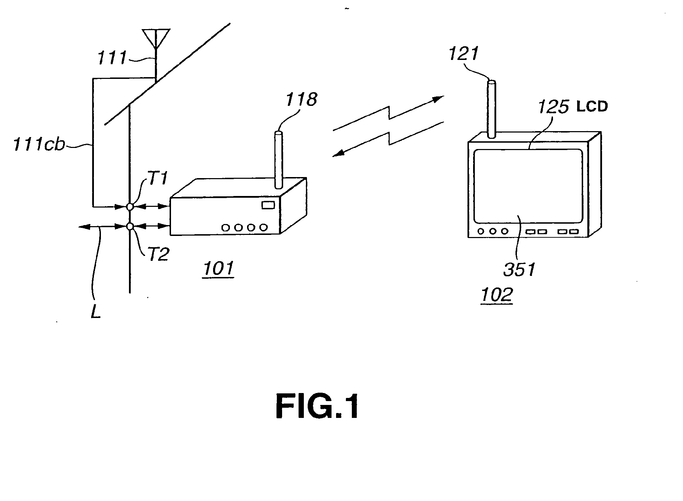

Fig.1 shows an illustrative structure of an information receiving system embodying the present invention. This television receiving system is made up of a station selector 101 and a display unit 102, interconnected over a radio path, as shown in Fig.1. The station selector 101 is mounted indoors in a home. The display unit 102 is used in the vicinity of the user.

To the station selector 101, there are connected an antenna cable 111cb, connected to a reception antenna 111 mounted outdoors for receiving television broadcast signals and pulled indoors from outside, and a telephone line L connected to a telephone network and similarly pulled indoors from outside, as shown in Fig.1.

The station selector 101 demodulates television broadcast signals, received by the antenna 111 and selected, and transmits over a transmission/reception antenna 118 to the display unit 102 over a radio route. Alternatively, the station selector 101 receives signals transmitted over a telephone line L and demodulates the received signals to transmit the resulting demodulated signals over the transmission/reception antenna 118 to the display unit 102 over a radio route.

The station selector 101 is able to receive the transmitted information, such as command information or an E-mail, from the display unit 102, over the transmission/reception antenna 118, change the television broadcast signals to be selected depending on the command information as received, or to transmit the information sent thereto over the telephone line L.

The display unit 102 receives signals of the television broadcast program, transmitted over the radio path from the station selector 101, to display a picture corresponding to picture signals contained in the received signals on a display screen of an LCD (liquid crystal display) 125 as well as to radiate the speech corresponding to speech signals contained in the received signals from a loudspeaker to enable the viewing of the broadcast television program.

On the other hand, the display unit 102 is able to receive signals of, for example, an E-mail or home pages of the Internet, transmitted over a radio path, via the telephone line L, to form display signals from the received signals and to display a picture corresponding to the display signals on the LCD 125 for display to the user.

On the display screen of the LCD 125 of the display unit 102 of the present embodiment, there is bonded a touch panel 351, so that the input of the information including various command inputs from the user can be accepted by the display information demonstrated on the display screen of the LCD 125 and by the touch panel 351. With the aid of the touch panel 351, a variety of operations can be made, such as creation and transmission of an E-mail or reception and display of an E-mail addressed to no other than the user.

So, the station selector 101 has an interfacing function of downloading broadcast television signals or a variety of the information furnished over the telephone line L to the television receiving system of the present embodiment or of sending out the information from the television reception system of the present embodiment over the telephone line L to the communication network. The station selector 101 also has a user interface function of furnishing the information, downloaded by the station selector 101 to the television reception system of the present embodiment, to the user, or of accepting the information from the user.

Referring to Fig.1, the station selector 101 is mounted at a position such that, depending on the mounting positions of a connection terminal T1 to the antenna cable 111cb or a connection terminal T2 to the telephone line L, the station selector 101 can be connected reliably to both of these terminals. Since the station selector 101 and the display unit 102 are connected over the radio path, as shown in Fig.1, the television broadcast program, desired to be viewed, can be viewed on any site within an area of possible reception of radio signals, using display unit 102. In addition, connection may be established with the Internet to enable exchange of E-mails.

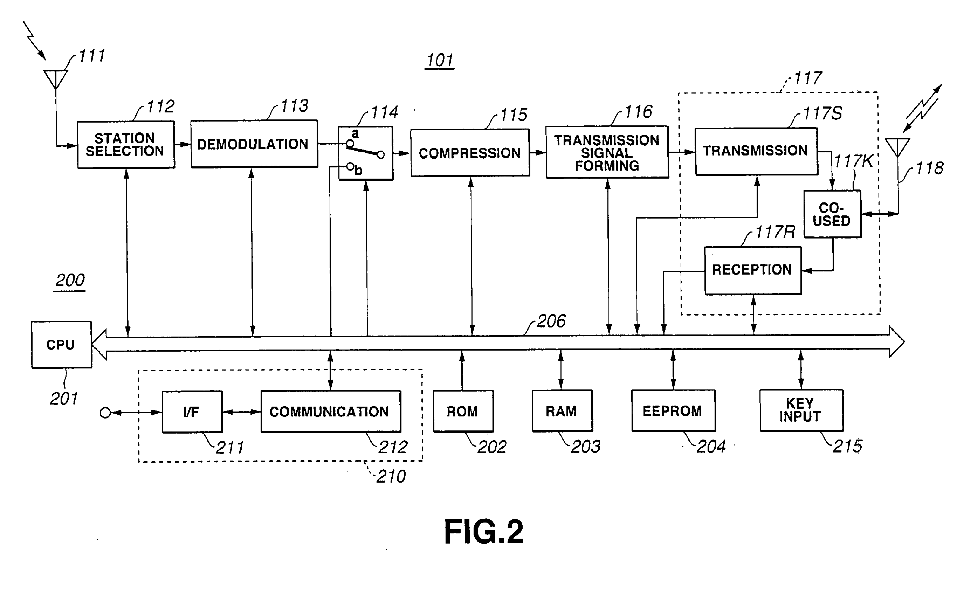

Fig.2 is a block diagram showing a more detailed structure of the station selector 101. The various units of the station selector 101 are controlled by a control unit 200.

Referring to Fig.2, the control unit 200 is a micro-computer comprised of a CPU (central processing unit) 201, a ROM (read-only memory) 202, a RAM (random-access memory) 203 and an EEPROM (electrically erasable programmable read-only memory) 204, interconnected over a CPU bus 206.

The ROM 202 has recorded therein a variety of processing programs to be executed in the station selector 101 of the present embodiment and data required for processing. The RAM 203 is mainly used as a work area for various processing operations, such as transiently memorizing and holding data obtained in the various processing operations.

The EEPROM 204 is a so-called non-volatile memory in which the information memorized and held therein is not lost even on power down. For example, the EEPROM 204 is designed to memorize and hold the information of the broadcasting channel selected immediately before power down of the main power source of the station selector 101, and to select broadcast signals of the channel selected immediately before the directly previous power down, by way of realizing what may be called the last channel memorizing function.

Referring to Fig.2, in the station selector 101 of the present embodiment, the antenna cable 111cb from an outdoor receiving antenna 111 for receiving television broadcast signals is connected to a station selection unit 112 of the station selector 101. The television broadcast signals, received by the antenna 111, are sent to the station selection unit 112.

The station selection unit 112 selects television broadcast signals, corresponding to the station selection signal from the control unit 200, to route the selected television broadcast signals to a demodulator 113. The demodulator demodulates the television broadcast signals, supplied thereto, to send the demodulated signals (signals of the television program) to an input end *a* of a switching circuit 114.

The switching circuit 114 is switching-controlled by a switching control signal from the control unit 200 to switch between the outputting of signals of the television program supplied from the demodulator 113 to the input end *a* and the outputting of signals of the television program supplied from the control unit 200 to the input end b. Meanwhile, the signals supplied from the control unit 200 to the switching circuit 114 may be typified by E-mails or so-called home page information of the Internet, supplied over the telephone line L to the station selector 101 so as to be received by a modem 210.

The signals output from the switching circuit 114 are sent to a compression processor 115. The compression processor compresses the data in accordance with a preset compression system. This compression processor 115 compresses signals from the switching circuit 114 using a data compression system, such as MPEG (Moving Picture Experts Group) system or wavelet system.

The compressed signals from the compression processor 115 are sent to a transmission signal forming unit 116, which then forms transmission signals conforming to a preset communication protocol. In the present embodiment, transmission signals conforming to the IEEE (Institute Electrical and Electronics Engineers) 802.11 system, or a protocol representing its further development, are formed.

The transmission signals, formed in the transmission signal forming unit 116, are sent to a transmission processor 117S of a radio unit 117. The transmission processor 117S is responsive to control signals from the control unit 200 to modulate or amplify transmission signals. The transmission signals, processed by the transmission processor 117S, are sent over a radio path via a co-used unit 117K and the transmission/reception antenna 118.

The co-used unit 117K is used for prohibiting interference between the transmission signals and the reception signals. That is, the station selector 101 in the present embodiment is configured for receiving e.g., command signals, sent over a radio route from the display unit 102, via transmission/reception antenna 118, as described above. So, the co-used unit 117K is designed to prevent transmission signals from the transmission processor 117S from interfering with the reception signals received over the transmission/reception antenna 118.

The signals received via transmission/reception antenna 118, such as station selection command signals, are sent through the co-used unit 117K to a reception processor 117R. The reception processor processes the signals supplied thereto, such as with demodulation, into signals that can be coped with by the control unit 200. These signals are sent to the control unit 200.

If the signals from the reception processor 117R are command signals, such as station selection commands, the control unit 200 controls relevant components responsive to these commands. Thus, if the signals supplied from the reception processor 117R to the control unit 200 are station selection commands, the control unit 200 sends the station selection signals, corresponding to the so supplied station selection commands, to the station selection unit 112, to change the selected television broadcast signals.

If the signals supplied to the control unit 200 from the reception processor 117R are transmission signals, such as E-mail, the control unit 200 establishes connection through the modem 210 and the telephone line L, to the telephone network, to send the transmission information to the telephone network, to which the connection has now been established, to send the transmission information to a targeted counterpart.

Referring to Fig.2, the modem 210 is made up of an interfacing unit 211, expressed as I/F in Fig.2, and a communication unit 212. The I/F unit 211 is an interface between a communication network, connected between the counterpart and the station selector 101 through telephone network, on one hand, and the station selector 101, on the other, and is adapted for receiving signals transmitted through the telephone network (telephone line L) and for transmitting signals from the station selector 101. The communication unit 212 demodulates signals received over the I/F unit 211 to send the demodulated signals to the control unit 200 and for modulating the transmission signals from the control unit 200 to send the resulting signals to the I/F unit 211. This enables various data to be exchanged with the counterpart to which connection is established over the telephone network.

Thus, the station selector 101 of the present embodiment is connected to the Internet through the modem 210, telephone line L and a preset ISP (Internet Service Provider) to be furnished with various information over the Internet, receive or transmit E-mails or to have chat.

To this end, the control unit 200 also has the function of controlling the modem 210 to provide for off-hook or on-hook, and the function of sending dial signals to the telephone network in case the model 210 is controlled for off-hook, by way of operating as a so-called dialer.

Referring to Fig.2, the controller 200 is provided with a key input unit 215, provided with power source on/off keys and various setting keys. This key input unit 215 is responsible for on/off control of the main power source of the station selector 101 and for a variety of setting inputs.

Thus, the station selector 101 of the present embodiment is configured for receiving, selecting and demodulating television broadcast signals, compressing the demodulated television broadcast signals and for transmitting the resulting signals over a radio path in accordance with a preset protocol. The station selector 101 of the present embodiment is also configured for receiving and demodulating the command information, compressing the demodulated information as in the case of the television broadcast signals and transmitting the resulting signals over a radio path in accordance with the preset communication protocol.

The station selector 101 of the present embodiment is also configured for receiving the command signals, such as station selection commands, transmitted over a radio path from the display unit 102 as later explained, to perform the processing in accordance with the information, or to send out the transmission information, such as E-mail, sent from the display unit 102, through the modem 210.

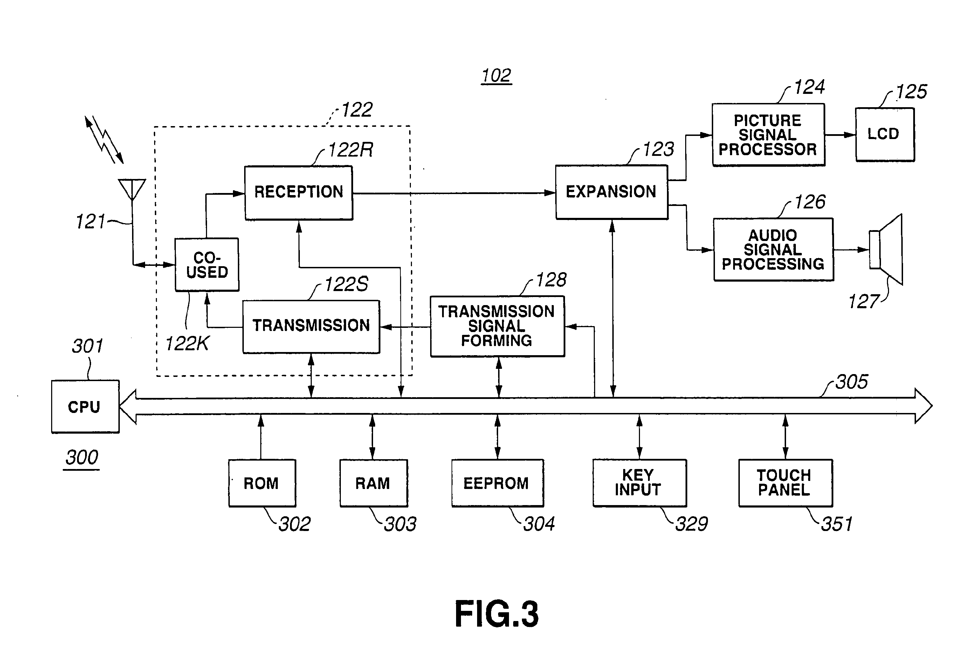

The display unit 102, connected over the radio path to the station selector 101, is now explained. Fig.3 illustrates this display unit 102. This display unit 102 is adapted to be controlled by a control unit 300 of a micro-computer comprised of a CPU 301, a ROM 302, a RAM 303 and an EEPROM 304, interconnected over a CPU bus 305.

In the ROM 302, a variety of programs run on the display unit 102 and data necessary for processing are stored. The RAM 303 is used mainly as a work area for various processing such as transient storage of data obtained in the various processing.

The EEPROM 304 is a so-called non-volatile memory in which the information memorized and held therein is not lost even on power down, and is designed to memorize and hold various setting parameters, E-mails prepared or received, or chat contents.

First, the operation of the display unit 102 in case of receiving radio signals from the station selector 101 is explained. The radio signals conforming to the preset communication protocol from the station selector 101 are received by a transmission/reception antenna 121 and thence supplied through a co-used unit 122K to a reception processor 122R, which reception processor 122R processes the supplied signals, such as with demodulation, to send the demodulated signals to a signal processor 123.

Since the station selector 101 sends signals, sent over a radio path, in a compressed form, a decompression unit 123 of the display unit 102 expands the modulated signals from the station selector 101 to restore the original signals. If the restored signals are signals of the television broadcast program, the restored signals are made up of picture signals and speech signals. The picture signals are sent to a picture signal processing unit 124, while the speech signals are sent to a speech signal processing unit 126.

The picture signal processing unit 124 forms display signals from the picture signals from the decompression unit 123. This causes a picture corresponding to the picture signals sent over the radio route from the station selector 101 to be displayed on the LCD 125. On the other hand, the speech signal processing unit 126 forms speech signals to be supplied to a loudspeaker 127, from the speech signals supplied thereto, to send the speech signals so formed to the loudspeaker 127. This allows the speech corresponding to the speech signals sent over the radio path from the station selector 101 to be radiated from the loudspeaker 127.

The display unit 102 thus receives signals, such as television broadcast programs, transmitted from the station selector 101 over a radio path, and reproduces picture signals and speech signals of the received signals to output the reproduced signals for the user.

When the user acts on the touch panel 351 to command the electronic program guide to be acquired, the CPU 301 is responsive to this command to request access to a preset server over the antenna 121 by electrical waves through a transmission processor 122S and a co-used unit 122K.

This request is transmitted from the antenna 118 through the co-used unit 117K and the reception processor 117R to the CPU 201, which then controls the communication unit 212 for connection through I/F unit 211 to a preset ISP and thence through the Internet to a preset server. The CPU 201 then receives data of the electronic program guide returned from the server. On receipt of the data of the electronic program guide through the I/F unit 211 and the communication unit 212 from the server, the CPU 201 sends the received data to the RAM 203 for storage therein transiently.

The CPU 201 also sends picture data of the electronic program guide, stored in RAM 203, to the transmission signal forming unit 116 for forming transmission signals. The transmission signals, formed by this transmission signal forming unit 116, are output from the transmission processor 117S and the co-used unit 117K over the antenna 118 by electrical waves to the display unit 102, as the picture signals of the input electronic program guide are converted into transmission signals.

These electrical waves are received in the display unit 102 over antenna 121 and sent through the co-used unit 122K and the reception processor 122R to the decompression unit 123.

After expanding the picture data of the electronic program guide, supplied from the reception processor 122R, the decompression unit 123 causes the expanded data to be stored in an EEPROM 304.

The user then acts on the touch panel 351 to command the electronic program guide to be displayed. The CPU 301 then causes the data of the electronic program guide stored in the EEPROM 304 to be read out therefrom and routed to the decompression unit 123 and thence to the picture signal processing unit 124 for preset processing. The so processed data then is output to the LCD 125 for display.

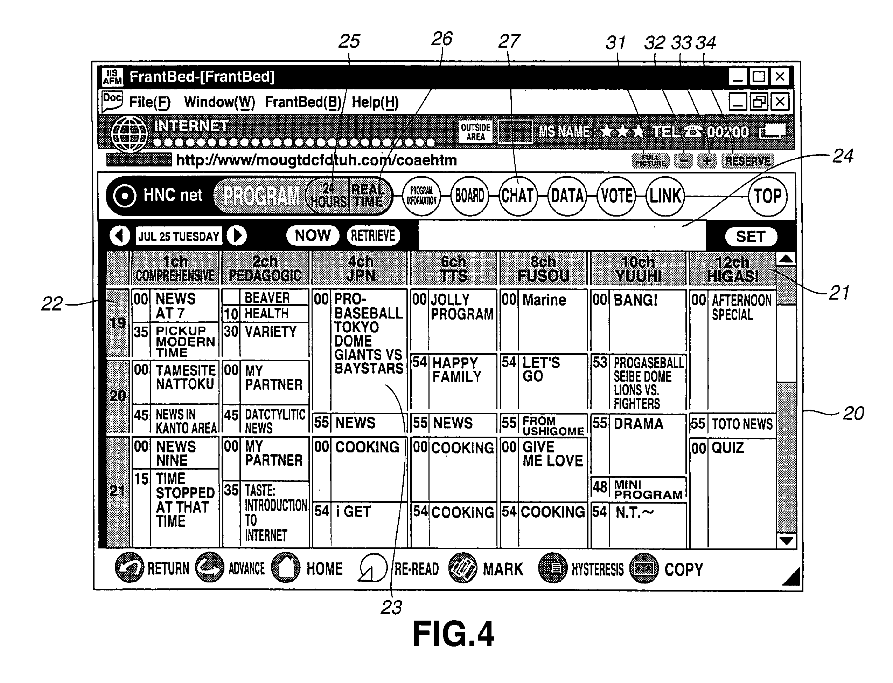

The electronic program guide, shown for example in Fig.4, is displayed on the LCD 125.

In this instance of display, display areas 21, 22 are provided on a window 20. In the display area 21, the numbers of the respective channels being digital television broadcast, and the names of the broadcasting stations, are demonstrated, whereas, in the display area 22, hour-based time zones, as from the current time, are demonstrated. In each display area 23 in a matrix defined by the display areas 21, 22, there is displayed the title of a program aired in the time zone represented on the display area 22 on a channel specified in the display area 21.

In display area 24, provided above the display area 21, detailed information and alarms, for example, are demonstrated, as will be explained subsequently.

Above the display area 24, buttons, such as a 24-hour button 25, a real-time button 26 and a chat button 27, are displayed.

Above the button display area, there is provided a URL display area, to the right side of which a full picture button 31, a minus (-) button 32, a plus (+) button 33 and a slave picture button 34, are displayed.

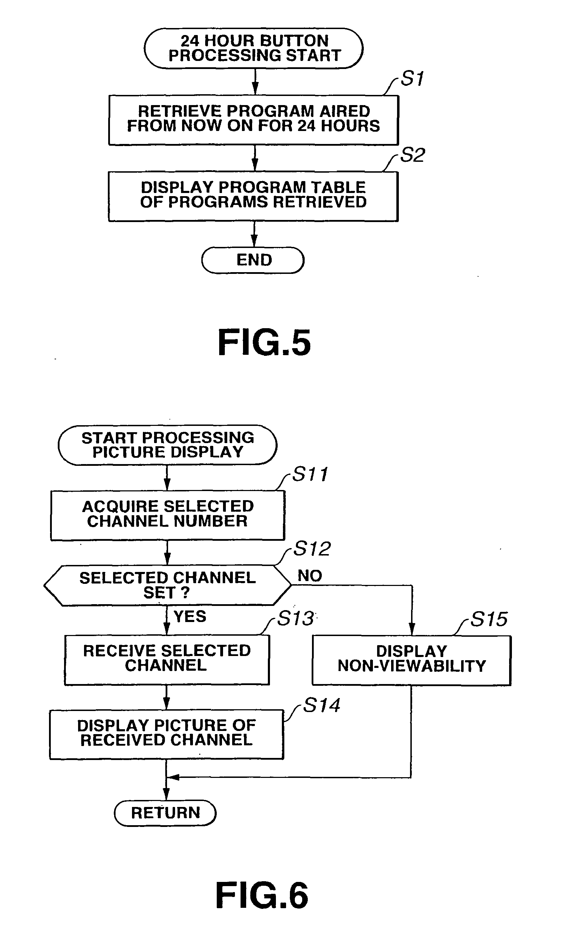

Fig.5 shows an instance of processing by the CPU 301 in case of actuation of the 24-hour button 25. That is, when the user acts on the touch panel 351 to turn on the 24-hour button 25, the processing shown in the flowchart of Fig.5 commences.

At step S1, the CPU 301 retrieves, from the electronic program guide stored in the EEPROM 304, the program aired during the 24-hour period as from the current time. At step S2, the program table of the retrieved program is expanded on the RAM 303 and read out to output and display the read-out program table through the decompression unit 123 and the picture signal processing unit 124 on the LCD 125.

That is, in the present instance, if the demonstration of the electronic program guide is commanded, the processing similar to that when the 24-hour button 25 is pressed, is carried out, so that a picture shown in Fig.4 is displayed on the LCD 125.

If, as the electronic program guide shown in Fig.4 is displayed on the LCD 125, the user acts on the touch panel 351 to specify one of the channels demonstrated on the display area 21, the signals corresponding to the actuation are input to the CPU 301. Through the transmission processor 122S, co-used unit 122K and the antenna 121, the CPU notifies the station selector 101 of the effect that the preset channel of the display area 21 has now been selected.

On receipt of this signal through the antenna 118, co-used unit 117K and the reception processor 117R, the CPU 201 of the station selector 101 executes the processing shown in the flowchart of Fig.6.

First, at step S11, the CPU 201 acquires the selected channel number. That is, the CPU 201 acquires the channel number sent from the display unit 102.

The program then moves to step S12 where the CPU 201 verifies, based on data stored in the EEPROM 204, whether or not the channel acquired at step S11 has already been set as the channel of reception.

That is, the user sets the territory of residence of no other than the user (territory of use of the station selector 101) prior to start of use of the station selector 101. For example, if the user is residing in Tokyo-to, this Tokyo-to is divided into three broadcast territories, that is [Tokyo], [Hachioji] and [Tama]. The user sets in which of these three broadcast territories the or she is residing, at the outset, by acting on the key input unit 215, for storage in the EEPROM 204.

For example, if the user is residing in Tokyo-to and the channel number acquired at step S1 is the channel four (JPN television), it is checked whether or not the broadcast on this channel can be received in Tokyo-to. If the broadcast territory is set by the user to be [Tokyo], for example, it is verified that the channel is receivable.

So, in this case, the program moves to step S16, where the CPU 201 controls the station selection unit 112 to receive the channel acquired at step S11. At step S14, the CPU 201 controls various components to display the pictures of the received channel.

Thus, the station selection unit 112 selects the broadcasting station of the specified channel and outputs the reception signals of the selected station to the demodulator 113. The demodulator 113 then demodulates the received signals to output the demodulated signals through a contact α of the switch 114 to the compression processor 115.

The compression processor 115 compresses the input signals in accordance with the MPEG system to output the compressed signals to the transmission signal forming unit 116. The transmission signal forming unit converts the input signals to transmission signals which are output over the antenna 118 through the transmission processor 117S and the co-used unit 117K as electrical waves to the display unit 102.

In the display unit 102, if these electrical waves are received over the antenna 121, the reception signals are sent from the co-used unit 122K to the reception processor 122R. The signals received by the reception processor 122R are sent to the decompression unit 123 for expansion. The picture data are sent to the picture signal processing unit 124 and thereby processed so as to be output to and displayed in the LCD 121. On the other hand, speech data are output to the speech signal processing unit 126 and thereby processed so as to be output at the loudspeaker 127.

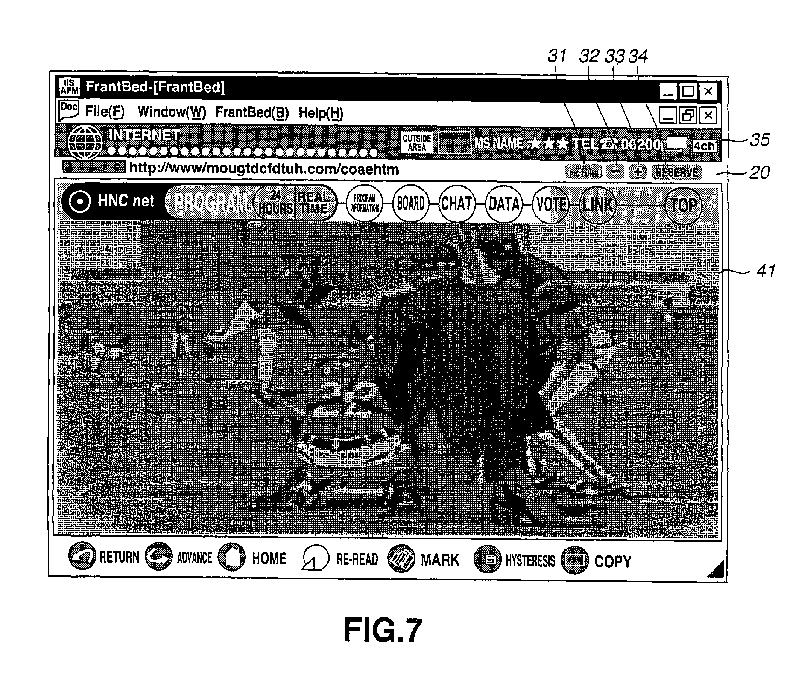

The pictures of the program specified by the user are displayed in this manner on the LCD 125, as shown for example in Fig.7. When the pictures of the preset channel are displayed, the number of the channel being received is indicated in a display unit 35. In the instance of Fig.7, a letter [4 ch] is displayed.

Meanwhile, the CPU 301 of the display unit 102 causes a picture of the received channel to be drawn and displayed in a window 41 placed above the window 20 of the electronic program guide.

If, at step S12, it is verified that the channel acquired at step S11 has not been set as the channel of reception, the program moves to step S15 where the CPU 201 generates a message indicating that the program cannot be viewed and causes the message to be output at the display unit 102 from the transmission processor 117S and the co-used unit 117K over the antenna 118.

When this signal is received over the antenna 121 through the co-used unit 122K and the reception processor 122R, the CPU 301 of the display unit 102 outputs the received signal from the decompression unit 123 through the picture signal processing unit 124 to the LCD 125 for display.

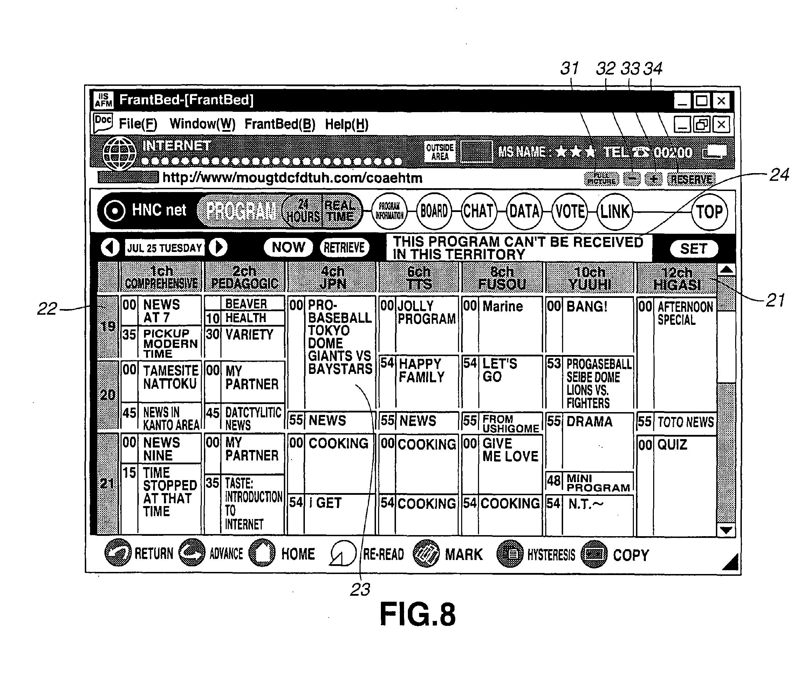

Thus, an alarm message reading: [This program cannot be received in this territory] is displayed in the display area 24 of the window 20 of the electronic program guide, as shown for example in Fig.8. An alarm sound may also be issued as speech signals simultaneously. In such case, the alarm with the speech signals is output via loudspeaker 127 through the speech signal processing unit 126.

Thus, if a user residing e.g., in [Tokyo] specifies the program of a channel not aired in [Tokyo], that effect is notified by way of alarming.

This suppresses the risk of misconception on the part of the user that the apparatus is in disorder or the electronic program guide is not functioning properly.

In order to have the user recognize the fact that the program the or she has specified cannot be viewed, the picture which should display the program of the window 41 inherently specified may be kept transparent. Since the window 20 is arranged on the back side of the window 41, the picture displayed is the picture of the window 20, herein the electrical program guide.

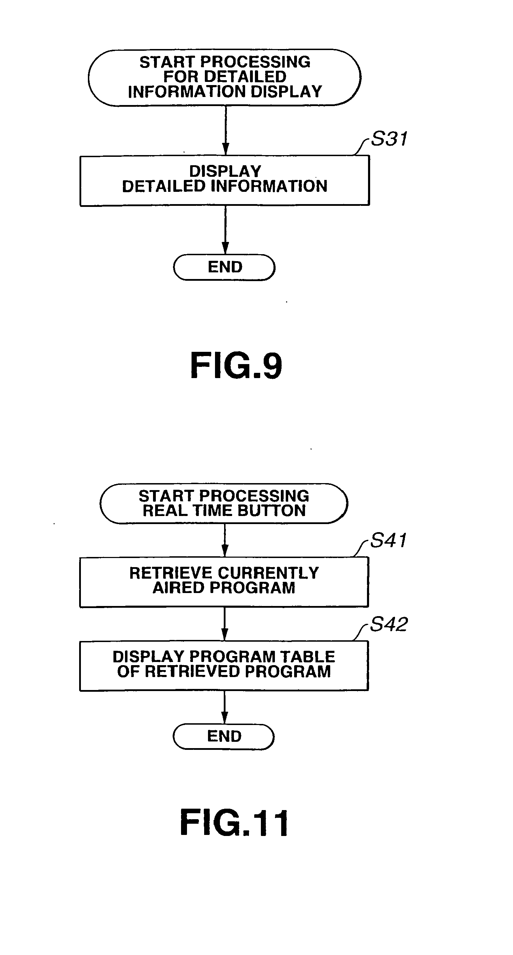

On the other hand, if, as the electronic program guide shown in Fig.4 is displayed, the user acts on the touch panel 351 to specify a portion in the display area 23 corresponding to a preset program, the processing of displaying the detailed information shown in the flowchart of Fig.9 is executed.

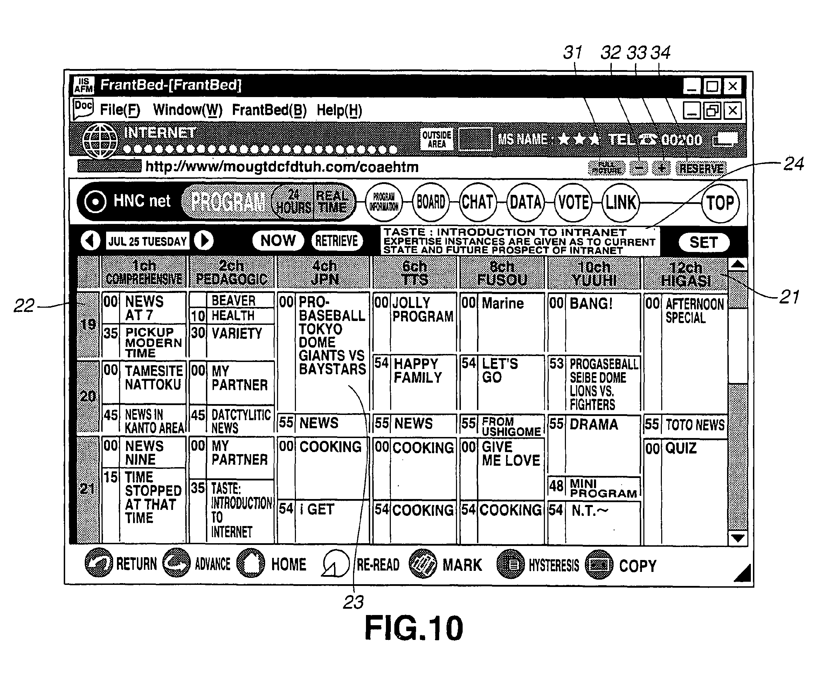

That is, the CPU 301 of the display unit 102 reads out the detailed information corresponding to the program of the portion acted on, from the data of the electronic program guide stored in the EEPROM 204, and causes it to be written in the display area 24 of the electronic program guide expanded on the RAM 303. Since this picture data is transferred, a picture such as is shown in Fig.10 is displayed on the LCD 125.

In the instance of Fig.10, as the column of a program [Taste: Introduction to Intranet] aired as from 9.30 pm (21.30) of the NHK Educational Television (channel three) on the display area 23 is specified, its detailed information reading: [The current status and the future prospect of Intranet are to be checked on the basis of specified instances] is demonstrated as the detailed information on the display area 24.

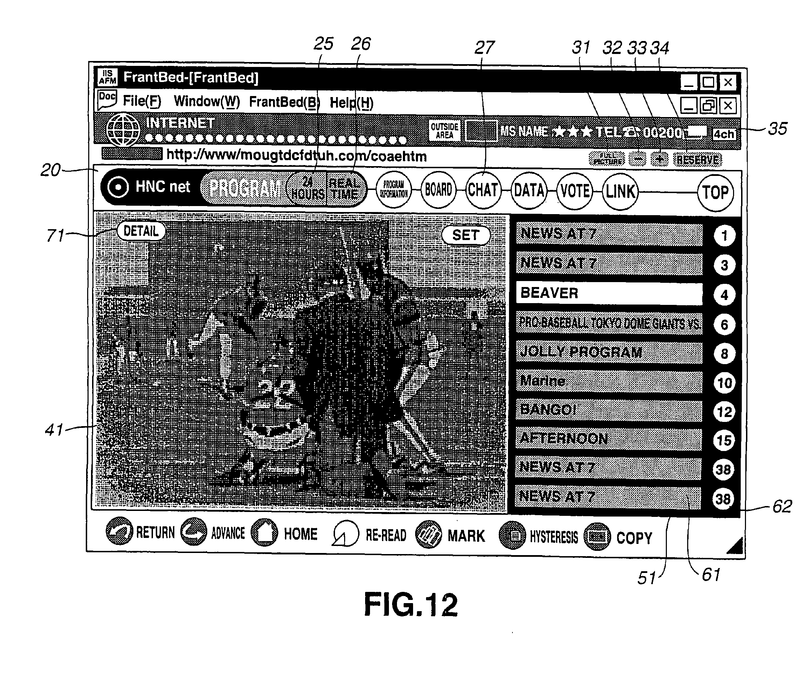

Meanwhile, the display processing for this detailed information is also executed when a details button 71 of Fig.12 as later explained is pressed.

If the real-time button 26, among the buttons shown in Fig.4, is pressed, the CPU301 executes processing shown in the flowchart of Fig.11.

That is, the CPU 301 retrieves the programs aired at the current time from the data of the electronic program guide stored in the EEPROM 304. At step S42, the program table of the retrieved programs is generated and output to the LCD 125 for display.

That is, on retrieving the programs now on air from the data of the electronic program guide stored in the EEPROM 304, the CPU 301 forms the programs as a program table, which then is stored in the RAM 303. The CPU 301 outputs the electronic program guide stored in the RAM 303 to the LDC 125 for display.

This causes a picture shown in Fig.12 to be displayed on the LCD 125. In this instance of display, the size of the window 41 is made smaller than the state shown in Fig.7 and a window 51 is placed to the right of the window 41. In a display area 61 of the window 51, the titles of the programs aired at the current time are displayed. In a display area 62 to the right side of the display area 61, the numbers indicating the channel numbers on which the programs are aired are demonstrated in the display area.

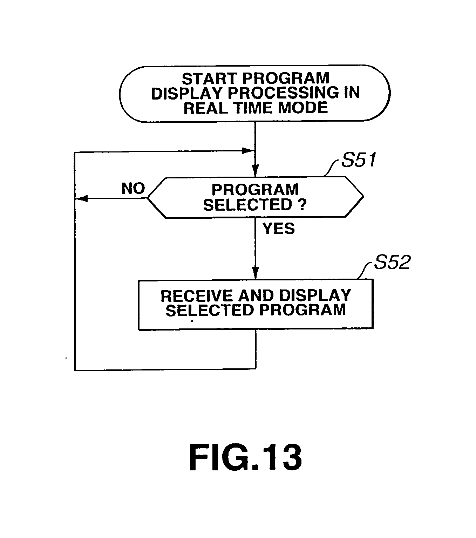

In this state, the CPU 201 executes the processing shown in the flowchart of Fig.13.

That is, the user at step S51 first selects the titles of the programs demonstrated in the display area 61, or the channel numbers demonstrated in the display area 62, to check whether or not the preset program has been selected. If it is verified from the signal from the display unit 102 that the program has been selected, the program moves to step S52, where the CPU 301 controls the station selection unit 112 to cause the selected program to be received and output.

Thus, if the channel indicated by number 3 of Fig.12, the program [news at 7] is received and displayed in place of the program so far displayed.

If, in the state shown in Fig.12, the details button 71 is actuated, the detailed information demonstrated in the window 41 is demonstrated in the window 51.

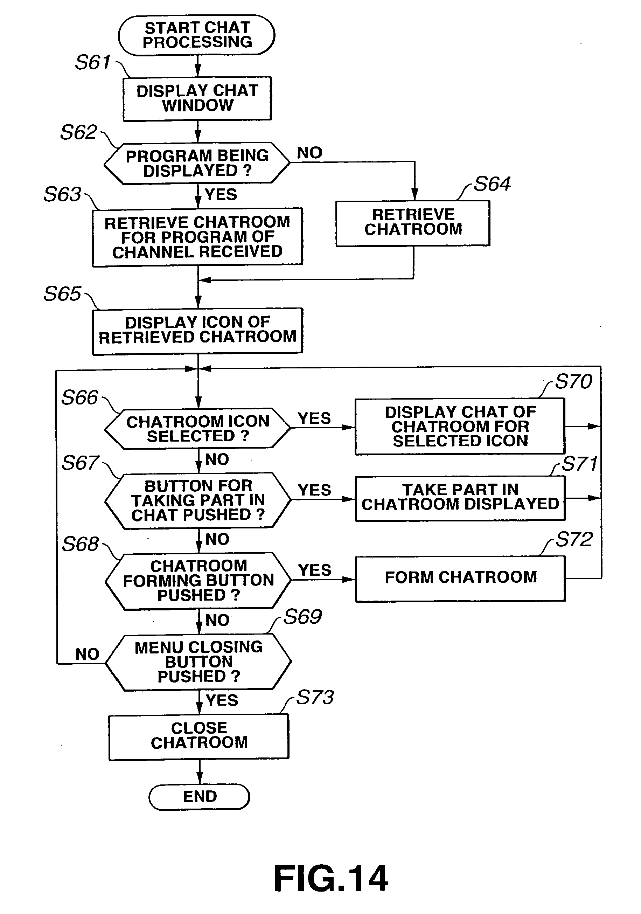

The processing on actuating the chat button 27 is explained with reference to the flowchart of Fig.14. This processing is started when the user acts on the chat button 27.

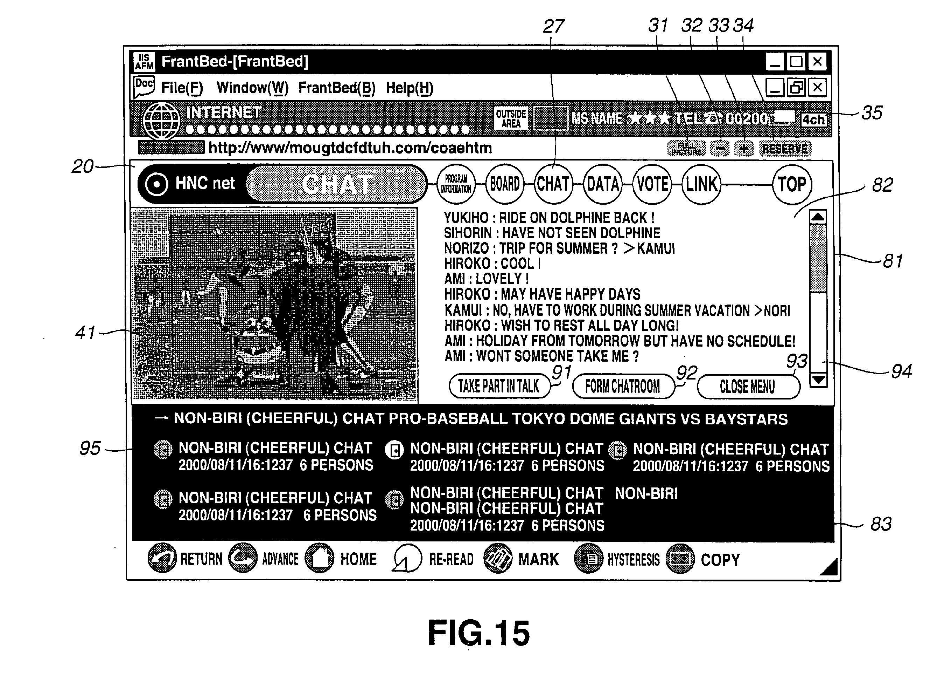

First, at step S61, the CPU 301 causes a chat window 81 to be demonstrated on the LCD 125, as shown in Fig.15. Then, at step S62, the CPU 301 checks whether or not any program is being displayed in the window 41. If any program is being displayed in the window 41, the program moves to step S63 where the CPU 301 executes the processing of retrieving the chat room corresponding to the program of the channel being received. Specifically, the CPU 301, connected to the Internet through the CPU 201, requests a preset server connected to the Internet to retrieve the chat room opened in association with the number of the channel being received by the user. The server is responsive to this request to retrieve the chat room opened in association with the specified broadcast channel.

If conversely it is verified at step S62 that no program is currently displayed, the CPU 301 at step S64 requests the server to retrieve the totality of chat rooms.

The server is responsive to the request from the station selector 101 to retrieve the chat rooms opened at this time to send the icons of the retrieved chat rooms.

On receipt of the chat room icons through CPU 201, the CPU 301 at step S65 causes the icons to be displayed on the LCD 125.

This causes icons 95 of the chat rooms, then opened, to be displayed on the display area 83 of the chat window 81. It is noted that, if the programs are demonstrated in the window 41, as described above, the icons 95 are only those of the chat rooms opened in association with these programs. This permits the users to enjoy the chat pertinent to the programs now being aired.

If conversely no program is demonstrated, the totality of icons corresponding to the chat room opened at the time point are demonstrated in the display area 83.

Then, at step S66, the CPU 301 verifies whether or not the icon 95 of the chat room has been selected. If it is verified that the icon 95 has not been selected, the program moves to step S67 where the CPU 301 verifies whether or not a 'take part in chat' button 91 displayed in a display area 82 of the window 81 has been pressed. If it is found that this button has not been pressed, the program moves to step S68 where the CPU 301 verifies whether or not a 'form a chat room' button 92 has been pressed. If it is found that this button has not been pressed either, the program moves to step S69 where the CPU 301 verifies whether or not a 'close menu' button 93 has been pressed. If the 'close menu' button 93 has not been pressed, the program reverts to step S66 to repeat the subsequent processing.

If it is verified at step S66 that the icon 95 of the chat room has been selected, the program moves to step S70 where the CPU 301 causes the chat of the chat room associated with the selected icon 95 to be demonstrated in the display area 82. That is, the CPU 301 requests the server to transfer the contents of the chat associated with the selected icon to display the contents of the chat so transferred on the LCD 215.

If it is verified at step S67 that the 'take part in chat' button 91 is actuated, the program moves to step S71 where the CPU 301 executes the processing of having the user take part in the chat room demonstrated in the display area 82 (chat room displayed in the processing of step S70).

Specifically, the CPU 301 transfers the text data, input via touch panel 351 or key input unit 329, to the server to distribute the data to the users taking part in the chat room.

If it is found at step S68 that the 'form chat room' button 92 has been actuated at step S68, the program moves to step S72 where the CPU 301 executes the processing of forming a chat room. That is, the CPU 301 requests the server to form a new chat room. On receipt of this request, the server forms a new chat room. If a new chat room has been formed, a corresponding icon 95 is newly formed and distributed from the server to respective users. The respective users, selecting the newly formed icon 95, may cause the contents of the chat room to be demonstrated in the display area 82. The users may act on the 'take part in chat' button 91 as necessary to take part in the chat room.

If it is verified at step S69 that the 'close menu' button 93 has been acted on, the program moves to step S73 where the CPU 301 executes the processing of closing the chat window 81.

That is, the CPU 301 requests the server to terminate the transfer of the chat. The server is responsive to this request to stop transferring the chat data. The CPU 301 terminates displaying the chat window 81 to restore the window 41 to the original size shown in Fig.7.

In the foregoing, data of the electronic program guide is stored in the EEPROM 304 of the display unit 102. Alternatively, the data may be stored in the EEPROM 204 of the display unit 101.

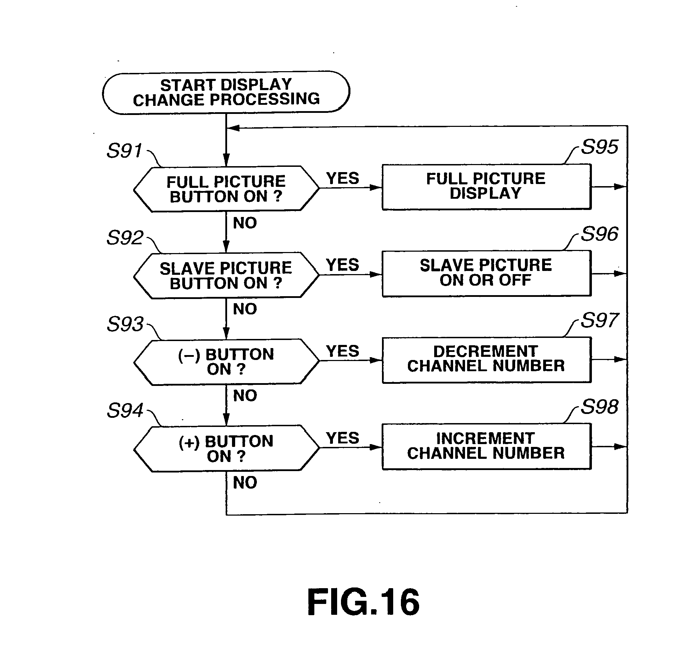

In a state shown in Fig.15 in which both the picture of the television broadcast and the chat are demonstrated, the processing shown in Fig.16 is executed.

At steps S91 to S94, the CPU 301 verifies whether or not the full picture button 31, minus (-) button 32, plus (+) button 33 or the slave picture button 34 has been turned on.

If it is verified that the full picture button 31 has been pressed, the CPU 301 proceeds to step S95 where the window 41, in which the picture of the channel received by the station selection unit 112 is displayed, is displayed as it is enlarged to the size shown in Fig.7 (maximum size).

If it is verified at step S92 that the slave picture button 34 has been pressed, the CPU 301 proceeds to step S96 to turn on or off the slave picture displayed in the window 41. For example, in case the slave picture is displayed in the window 41, a slave picture button 34 is a 'slave picture off' button. If the slave picture button 34 is turned on in this state, the slave picture of the window 41 is off (erased).

If conversely no slave picture is displayed, the slave picture button 34 is a 'slave picture on' button. If the slave picture button 34 is turned on in this state, the window 41 is displayed, in which the picture of the channel being received is demonstrated as a slave picture.

If it is verified at step S93 that the minus button 32 has been turned on, the CPU 301 proceeds to step S97 to decrement the channel number of the channel of reception by one. That is, the CPU 301 requests the CPU 201 to decrement the channel number of the channel of reception by one. The CPU 201 is responsive to this request to control the station selection unit 112 to change the channel number of the channel of reception to a number smaller by one. As a result, the picture of the channel of a number smaller by one is displayed in the window 41.

If it is verified at step S94 that the plus button 33 has been turned on, the CPU 301 proceeds to step S98 to increment the channel number of the channel of reception by one. That is, the CPU 301 requests the CPU 201 to increment the channel number of the channel of reception by one. The CPU 201 is responsive to this request to control the station selection unit 112 to change the channel number of the channel of reception to a number larger by one. As a result, the picture of the channel of a number larger by one is displayed in the window 41.

Thus, in the present embodiment, the channel of reception can be changed in a state in which the web information received over the Internet (chat in the embodiment of Fig.15) and the picture of the television broadcast are demonstrated simultaneously, while the picture demonstrating the channel of reception can be enlarged in size or erased.

Meanwhile, if the slave picture is erased, the CPU 201 causes the EEPROM 204 to store the number of the channel so far received. Thus, if reception of television broadcast is subsequently re-commanded, and if there is no particular channel designation, the channel stored in the EEPROM 204 as the last channel is selected by the station selector 101.

It should be noted that the processing shown by the flowchart of Fig.16 may similarly be executed in such a state in which the picture shown in Fig.4, Fig.7, Fig.8, Fig.10 or in Fig.12 is displayed.

Although the above-described sequence of operations can be performed on a hardware, it may also be executed by the software. If the sequence of operations is to be executed on the software, the program forming the software is installed in a dedicated hardware built in a computer. Alternatively, the program forming the software is installed from a network or a recording medium in e.g., a general-purpose personal computer capable of executing various functions.

In the present specification, the steps stating the program recorded on the recording medium includes parallel processing or batch-wise processing, in addition to the processing executed chronologically in an explicitly stated sequence.

Meanwhile, the system herein means an entire apparatus comprised of plural component units.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Various further respective embodiments and aspects of the invention are defined by the following numbered paragraphs.
1. An information processing apparatus comprising:
   acquisition means for acquiring data of an electronic program guide;
   electronic program guide display controlling means for controlling the display of said electronic program guide based on data of said electronic program guide acquired by said acquisition means;
   selection means for selecting a preset program based on said electronic program guide controlled as to display by said electronic program guide display controlling means;
   verifying means for verifying whether or not said program selected by said selecting means is a program of a channel that is receivable; and
   output information controlling means for controlling the information output for having the viewer recognize that, if the program selected by said selection means is verified as not being a program of a channel that is receivable, said program is not receivable.
2. The information processing apparatus according to paragraph 1 wherein said output information controlling means issues an alarm indicating that the program as selected by said selection means is not receivable.
3. The information processing apparatus according to paragraph 1 wherein said output information controlling means displays a background picture if the program selected by said selection means is not receivable.
4. The information processing apparatus according to paragraph 1 further comprising:
   detailed information display controlling means for controlling the display of the detailed information of a program demonstrated in said electronic program guide.
5. An information processing method comprising:
   an acquisition step of acquiring data of an electronic program guide;
   an electronic program guide display controlling step of controlling the display of said electronic program guide based on data of said electronic program guide acquired by processing in said acquisition step;
   a selection step of selecting a preset program based on said electronic program guide controlled as to display by processing in said electronic program guide display controlling step;
   a verifying step of verifying whether or not said program selected by processing in said selecting step is a program of a channel that is receivable; and
   an output information controlling step of controlling the information output for having the viewer recognize that, if the program selected by processing in said selection step is verified as not being a program of a channel that is receivable, said program is not receivable.
6. A recording medium having recorded therein a computer-readable program, said program including an acquisition step of acquiring data of an electronic program guide;
   an electronic program guide display controlling step of controlling the display of said electronic program guide based on data of said electronic program guide acquired by processing in said acquisition step;
   a selection step of selecting a preset program based on said electronic program guide controlled as to display by processing in said electronic program guide display controlling step;
   a verifying step of verifying whether or not said program selected by processing in said selecting step is a program of a channel that is receivable; and
   an output information controlling step of controlling the information output for having the viewer recognize that, if the program selected by processing in said selection step is verified as not being a program of a channel that is receivable, said program is not receivable.
7. An information processing apparatus comprising:
   acquisition means for acquiring data of an electronic program guide;
   first retrieval means for retrieving a program aired within a preset time as from the current time, based on the electronic program guide data acquired by said acquisition means;
   second retrieval means for retrieving the program aired at the current time, from the electronic program guide data acquired by said acquisition means;
   selection means for selecting one of retrieval by said first retrieval means and retrieval by said second retrieval means; and
   electronic program guide display controlling means for controlling the display of said electronic program guide based on retrieved results by said first retrieval means or retrieved results by said second retrieval means as selected by said selection means.
8. The information processing apparatus according to paragraph 7 further comprising:
   designating means for designating a program to be received based on said electronic program guide controlled as to display by said electronic program guide display controlling means.
9. An information processing method comprising:
   an acquisition step of acquiring data of an electronic program guide;
   a first retrieval step of retrieving a program aired within a preset time as from the current time, based on the electronic program guide data acquired by processing in said acquisition step;
   a second retrieval step of retrieving the program aired at the current time, from the electronic program guide data acquired by processing in said acquisition step;
   a selection step of selecting one of retrieval by processing in said first retrieval step and retrieval by processing in said second retrieval step; and
   an electronic program guide display controlling step of controlling the display of said electronic program guide based on retrieved results by processing in said first retrieval step or retrieved results by processing in said second retrieval step as selected by processing in said selection step.
10. A recording medium having recorded thereon a computer-readable program, said computer-readable program comprising:
   an acquisition step of acquiring data of an electronic program guide;
   a first retrieval step of retrieving a program aired within a preset time as from the current time, based on the electronic program guide data acquired by processing in said acquisition step;
   a second retrieval step of retrieving the program aired at the current time, from the electronic program guide data acquired by processing in said acquisition step;
   a selection step of selecting one of retrieval by processing in said first retrieval step and retrieval by processing in said second retrieval step; and
   an electronic program guide display controlling step of controlling the display of said electronic program guide based on retrieved results by processing in said first retrieval step or retrieved results by processing in said second retrieval step as selected by processing in said selection step.
11. An information processing apparatus comprising:
   receiving means for receiving data of a program being aired;
   program display controlling means for controlling the display of a program based on data received by said receiving means;
   command means for commanding display of a chat; and
   chat display controlling means for controlling the display of a chat window so that, when display of the chat is commanded by said command means, the chat window display is not overlapped with the program displayed.
12. The information processing apparatus according to paragraph 11 further comprising:
   retrieval means for retrieving a chat room opened in association with a program displayed when said chat is commanded to be displayed by said command means; and
   icon display controlling means for controlling the display so that an icon associated with said chat room retrieved by said retrieval means is opened in said chat window.
13. An information processing method comprising:
   a receiving step of receiving data of a program being aired;
   a program display controlling step of controlling the display of a program based on data received by processing in said receiving step;
   a command step of commanding display of a chat; and
   a chat display controlling step of controlling the display of a chat window so that, when display of the chat is commanded by processing in said command step, the chat window display is not overlapped with the program displayed.
14. A recording medium having recorded thereon a computer-readable program, said computer-readable program comprising:
   a receiving step of receiving data of a program being aired;
   a program display controlling step of controlling the display of a program based on data received by processing in said receiving step;
   a command step of commanding display of a chat; and
   a chat display controlling step of controlling the display of a chat window so that, when display of the chat is commanded by processing in said command step, the chat window display is not overlapped with the program displayed.
15. An information processing apparatus comprising:
   web information acquisition means for acquiring data of the web information;
   program information acquisition means for acquiring data of the program information being television broadcast;
   information display controlling means for controlling simultaneous display of said web information and the program information based on the data of the web information acquired by said web information acquisition means and the data of the program information acquired by said program information acquisition means; and
   changing means for changing said program information to be acquired, in a state in which said web information and the program information are displayed simultaneously.
16. The information processing apparatus according to paragraph 15 wherein said changing means changes a broadcasting channel being received as said program information.
17. The information processing apparatus according to paragraph 15 wherein said changing means erases a broadcasting channel being received as said program information.
18. An information processing method comprising:
   a web information acquisition step for acquiring data of the web information;
   a program information acquisition step for acquiring data of the program information being television broadcast;
   an information display controlling step for controlling simultaneous display of said web information and the program information based on the data of the web information acquired by processing in said web information acquisition step and the data of the program information acquired by processing in said program information acquisition step; and
   a changing step for changing said program information to be acquired, in a state in which said web information and the program information are displayed simultaneously.
19. A recording medium having recorded thereon a computer-readable program, said computer-readable program comprising:
   a web information acquisition step for acquiring data of the web information;
   a program information acquisition step for acquiring data of the program information being television broadcast;
   an information display controlling step for controlling simultaneous display of said web information and the program information based on the data of the web information acquired by processing in said web information acquisition step and the data of the program information acquired by processing in said program information acquisition step; and
   a changing step for changing said program information to be acquired, in a state in which said web information and the program information are displayed simultaneously.

## Claims

1. An information processing apparatus comprising:
web information acquisition means for acquiring data of the web information;
program information acquisition means for acquiring data of the program information being television broadcast;
information display controlling means for controlling simultaneous display of said web information and the program information based on the data of the web information acquired by said web information acquisition means and the data of the program information acquired by said program information acquisition means; and
changing means for changing said program information to be acquired, in a state in which said web information and the program information are displayed simultaneously.

2. The information processing apparatus according to claim 1 wherein said changing means changes a broadcasting channel being received as said program information.

3. The information processing apparatus according to claim 1 wherein said changing means erases a broadcasting channel being received as said program information.

4. An information processing method comprising:
a web information acquisition step for acquiring data of the web information;
a program information acquisition step for acquiring data of the program information being television broadcast;
an information display controlling step for controlling simultaneous display of said web information and the program information based on the data of the web information acquired by processing in said web information acquisition step and the data of the program information acquired by processing in said program information acquisition step; and
a changing step for changing said program information to be acquired, in a state in which said web information and the program information are displayed simultaneously.

5. A recording medium having recorded thereon a computer-readable program, said computer-readable program comprising:
a web information acquisition step for acquiring data of the web information;
a program information acquisition step for acquiring data of the program information being television broadcast;
an information display controlling step for controlling simultaneous display of said web information and the program information based on the data of the web information acquired by processing in said web information acquisition step and the data of the program information acquired by processing in said program information acquisition step; and
a changing step for changing said program information to be acquired, in a state in which said web information and the program information are displayed simultaneously.
